# EUROPEAN PATENT APPLICATION

(11) **EP 1 816 378 A2**
(43) Date of publication of application: **08.08.2007**
(21) Application number: 07000983.2
(22) Date of filing: 18.01.2007
(51) Int. Cl.: F16K 17/04

(54) **Safety valve for boilers**

(30) Priority: 01.02.2006 IT MI20060037 U
(71) Applicant: Caleffi S.p.A., 28010 Fontaneto d'Agogna, Novara (IT)
(72) Inventor: Caleffi, Marco, 28021 Borgomanero (Novara) (IT)
(74) Representative: Coloberti, Luigi

(57) **Abstract**

The safety valve (10), suitable to be fitted onto a hydraulic control unit of a boiler, comprises a valve body (11) made of plastic material, having an inlet opening (12) and an outlet duct (13) for a water flow; the valve (10) further comprises a plug member (15) for shutting off the flow, and a spring means (16) designed to bias the plug member (15) to a closed position against a watertight seat (17) coaxially arranged to the inlet opening (12) for the flow. A metal tubular connection member (18) is provided at the inlet opening (12) of the valve body (11), for connection to the hydraulic control unit, the connection member (18) being provided, on a first end, with watertight coupling means for coupling to the inlet opening (12) of the valve body (11), and, on its second end, with connecting means for connection to the hydraulic control unit.

## Description

### BACKGROUND OF THE INVENTION

This invention concerns a safety valve for boilers, suitable in particular for being installed in conventional hydraulic control units normally provided in wall-mounted boilers.

### STATE OF THE ART

At present, wall-mounted boilers are provided with a hydraulic control unit, integrated with a water circulation pump and with seats and/or housings for connecting different control apparatuses.

In compliance with the regulations in force, the wall-mounted boilers of the aforementioned kind must be fitted with a safety valve, capable of automatically discharging water when the pressure inside the boiler goes over a pre-established value, exceeding the normal working pressure.

Conventionally, safety valves are manufactured with a body made entirely of brass, which can be screwed onto the hydraulic control unit.

However, a solution of this kind involves high manufacturing costs, due primarily to the need to carry out a series additional machining operations on the blank of the valve body, in order to obtain the desired final characteristics, as well as to high raw material costs.

Moreover, this solution entails a series of limitations with regard to the shape and the overall dimensions of the valve itself, and, whenever any modifications must be made to the connection for fitting the valve on the hydraulic control unit, in relation to installation requirements or to the type of hydraulic unit itself, it is necessary to set again the manufacturing process and the various machining operations required for obtaining the valve, with consequent operative difficulties and an increase in costs.

One possible alternative solution, whereby it would be possible to at least partially obviate these drawbacks, would be that of making the valve body by moulding it entirely from plastic material.

Compared to the conventional safety valves made of brass, advantages would be achieved in terms of material costs, as well as of simplification and reduction in manufacturing costs, since it would no longer be necessary to carry out additional machining operations after the moulding of the valve body.

In this way the manufacturing process can also be standardised, by preparing a series of moulds whereby it is possible to produce with the utmost simplicity different versions of the valve body, suitable for installation in the most commonly used hydraulic units.

However, over time, in the heating system field, the number of different configurations and variations as regards the hydraulic control units and relevant connecting fixtures, has become higher and higher, in relation to the type and model of the wall-mounted boiler.

Consequently, a particularly felt need is to have a safety valve which can be produced by means of a standardised manufacturing process, in order to reduce the costs, but which at the same time can be produced in a simple and flexible manner in different versions suitable to be fitted to the various hydraulic units, without the need for substantial modifications to the manufacturing process and without the need to carry out additional machining operations on the valve body.

### OBJECTS OF THE INVENTION

The main object of this invention is to provide a safety valve for wall-mounted boilers which is structurally simple and economical, since it can be produced in a standardized way starting from a single mould, or, at the most, from a few moulds for plastic material, and which at the same time can be produced in a flexible manner in different versions suitable for being installed on the various hydraulic control units conventionally in use.

A further object of this invention is to provide a safety valve of the aforementioned kind, which has structural and hydraulic characteristics capable of complying with the regulations in force, having, in particular, high structural strength in correspondence with the area of connection with the hydraulic control unit.

### BRIEF DESCRIPTION OF THE INVENTION

The foregoing can be achieved by means of a safety valve, suitable for being fitted onto a hydraulic control unit of a boiler, the valve comprising:
- a valve body having an inlet opening and an outlet duct for a water flow, communicating with each other through a chamber for a valve plug member, the valve body being made of moulded plastic material;
- a valve plug member for shutting off the flow, movably supported within said chamber, and
- a spring means shaped and disposed to bias the plug member to a closed position against a watertight seat coaxially arranged to the inlet opening for the flow,
characterised in that a metal tubular connection member is provided at the inlet opening of the valve body, for connection to the hydraulic control unit,
said metal connection member being provided, on a first end, with watertight coupling means for coupling to the inlet opening of the valve body, and, on a second end, with connecting means for connection to the hydraulic control unit.

### BRIEF DESCRIPTION OF THE DRAWINGS

These and further features according to this invention, will be more clearly evident from the following description with reference to the accompanying drawings, in which:
- Fig. 1 shows a longitudinal cross-sectional view of a safety valve for wall-mounted boilers, according to this invention, in which the valve body and the tubular connection member have a first configuration;
- Fig. 2 shows a longitudinal cross-sectional view of the valve body and of the tubular connection member, according to a second configuration;
- Fig. 3 shows a longitudinal cross-sectional view of the valve body and of the tubular connection member according to a third configuration;
- Fig. 4 shows a cross-sectional view of the valve body and of the tubular connection member of Fig. 3, along the line 4-4; and
- Fig. 5 shows a longitudinal cross-sectional view of the valve body and of the tubular connection member, in which further alternative variations are provided.

### DETAILED DESCRIPTION OF THE INVENTION

The general characteristics of this invention will be described hereunder by means of several embodiments which, starting from a single inventive concept, achieve equivalent benefits.

Therefore in the various figures the same reference numbers have been used for indicating similar or equivalent parts.

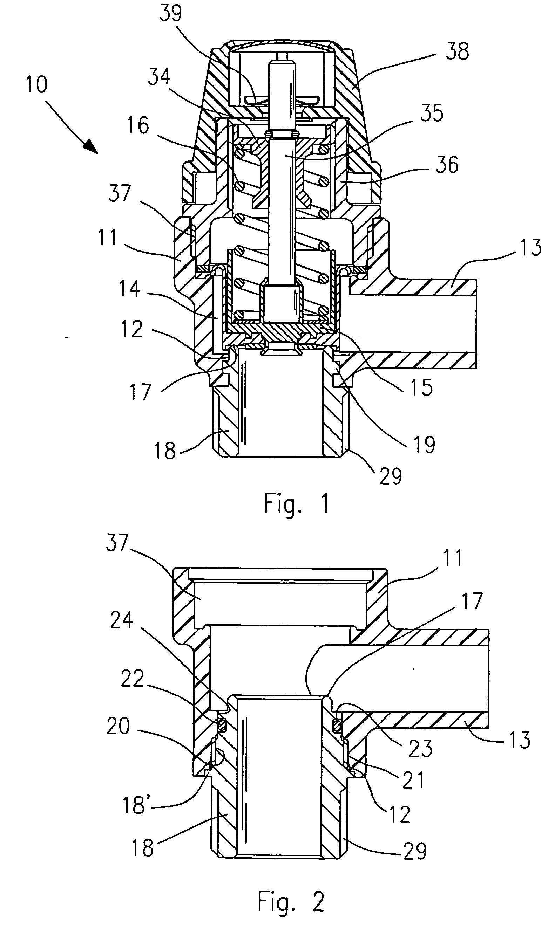

Fig. 1 shows a safety valve according to this invention, suitable for being fitted onto a hydraulic control unit (not shown) of a boiler.

The valve, indicated as a whole by the reference number 10, comprises a valve body 11 having an inlet opening 12 and an outlet duct 13 for a water flow, communicating with each other through a chamber 14 for a valve plug member.

The valve body 11 is advantageously manufactured from plastic material by moulding; in this way it is possible produce valve bodies having optimal structural and functional characteristics, without the need to carry out any additional operations or machining.

In particular, compared to a conventional valve body made of metal, advantages are achieved in terms of manufacturing and material costs, together with the added advantage of being able to give the valve body any desired shape.

The valve 10 also comprises a plug member 15 for shutting off the flow, for example of the membrane or diaphragm type or any other suitable type, which is movably supported inside the chamber 14, and is biased to a normally closed position against a watertight seat 17, coaxially arranged to the inlet opening 12, by appropriate spring means, for example a helical spring 16.

The valve 10 further comprises a metal tubular connection member 18 at the inlet opening 12 of the valve body 11, for connection to the hydraulic control unit of the boiler.

The metal connection member 18, preferentially in the form of a tubular fitting made for example of brass, is provided, at a first end, with watertight coupling means for coupling to the inlet opening 12 of the valve body 11, while at its second end it is provided with connecting means for connection to the hydraulic control unit.

The connection member 18 is preferentially provided with a suitable rib or stop surface 18' designed to accurately determine the final position for its coupling to the valve body 11, as for example illustrated in Fig. 2.

In the cases illustrated in Figures 1, 2 and 3, the connection fitting 18 extends into the inlet opening 12 of the valve body 11, ending at its first end with the aforesaid watertight seat 17 for the plug 15.

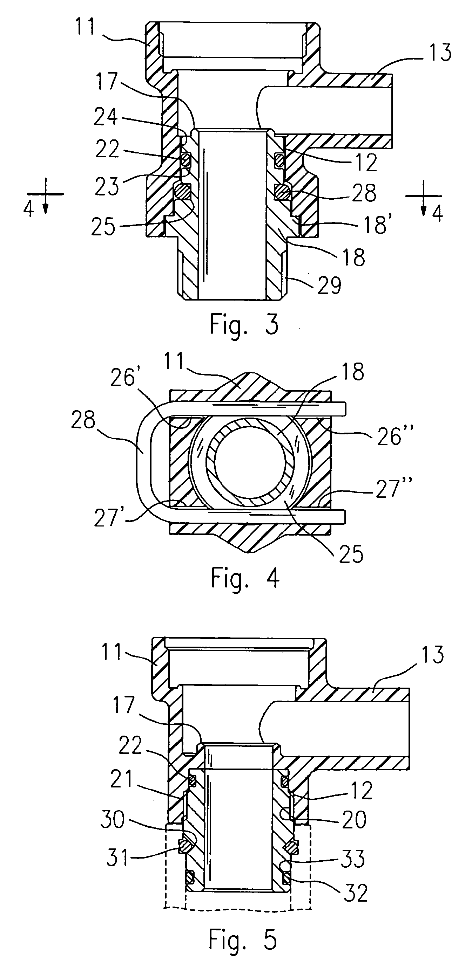

Alternatively, as illustrated in Fig. 5, the watertight seat 17 can be shaped directly in the valve body 11, coaxially arranged to the inlet opening 12 for the flow.

The connection fitting 18 in Fig. 1 comprises at its first end an annular rib 19, which is mechanically and tightly coupled to the valve body 11 by moulding the valve body 11 itself onto the first end of the connection fitting 18.

Alternatively, different watertight coupling means can be provided for coupling the connection fitting 18 to the valve body 11.

In particular, as illustrated in Fig. 2, the connection fitting 18, at its first end, can be provided with a first fastening screw thread 20, which engages with a corresponding screw thread 21 made in the inlet opening 12 of the valve body 11.

Moreover, in order to ensure the hydraulic seal, a first annular sealing element 22 is provided, housed in a first peripheral annular seat 23 in the connection fitting 18, which is shaped and disposed in such a way as to remain tightly in contact with a surface 24 inside the inlet opening 12 of the valve body 11.

Another alternative for the watertight coupling means between the connection fitting 18 and the valve body 11 is illustrated in Figures 3 and 4, in which the tubular fitting 18 comprises at its first end a first peripheral annular groove 25, while the valve body 11 is provided with axially aligned holes 26', 26" and 27', 27" which extend along two opposite sides of the inlet opening 12 of the valve body 11.

The coupling means in this case also comprise a retaining fork 28 for retaining the connection fitting 18, the fork 28 being insertable into the axially aligned holes 26', 26", 27', 27" of the valve body 11; in this way, since the fork 28 extends through the annular groove 25 in the connection fitting 18, it holds the fitting 18 itself in place.

In order to ensure the necessary hydraulic seal, also in this case a first annular sealing element 22 is provided, which is housed in a first peripheral annular seat 23 in the connection fitting 18, the sealing element 22 being shaped and disposed in such a way as to remain tightly in contact with a surface 24 inside the inlet opening 12 of the valve body 11.

As mentioned, the second end of the connection fitting 18 is provided with means for connecting it to the hydraulic control unit, which in the cases illustrated in figures 1, 2 and 3, comprise a second screw thread 29 for securing the valve to the hydraulic control unit.

Alternatively, the second end of the connection fitting 18 can be provided with quick-connecting coupling means; for example, as shown in Fig. 5, the connection fitting 18 can comprise a second peripheral annular groove 30, engageable by retaining means on the hydraulic control unit, for example in the form of another retaining fork 31, or in the form of other suitable retaining means.

In addition, a second annular sealing element 32 is provided, housed in a second peripheral annular seat 33 in the connection fitting 18.

It is understood that all the alternatives shown in figures 1, 2, 3 and 5 with regard to the watertight coupling means between the connection fitting 18 and the valve body 11, and the connecting means for connection of the fitting 18 itself to the hydraulic control unit, are variously interchangeable and combinable with one another, and that further variations in addition to those shown are not excluded.

The setting of the pressure threshold value, over which the valve 10 opens, can be regulated in any appropriate way, for example by modifying the compression of the spring 16, by means of a threaded bush 34 which, as shown in figure 1, is guided along a rod 35 integral with the plug 15, inside a sleeve 36 screwed into a seat 37 in the valve body 11.

Lastly, the valve 10 comprises a hand grip 38 operatively connected to an actuating cam 39 for the manual opening of the valve 10.

From the foregoing it will be evident that the safety valve for wall-mounted boilers according to this invention, is structurally simple and economical, in that it can be manufactured in different versions, capable of being installed on the various hydraulic control units in use, by using a single mould, or at the most a few moulds for producing the valve body made of plastic material. This is made possible by the fact that, each time, during manufacturing, each valve body produced or to be produced with the arranged moulds, is coupled with the metal connection fitting most suitable for obtaining the required version of the valve, without the need to carry out any additional operations or machining.

Moreover, thanks to the fact of providing a connection fitting made of metallic material in correspondence with the area of connection with the hydraulic control unit, the safety valve has a high structural strength precisely where the greatest stresses occur in relation to water pressure, and on the watertight seat.

What has been described and shown with reference to the accompanying drawings, has been given purely by way of example in order to illustrate the general characteristics of the invention, and of several of its preferential embodiments; therefore, other modifications and variations to the safety valve for wall-mounted boilers are possible, without thereby departing from the scope of the claims.

## Claims

1. Safety valve (10), suitable for being fitted onto a hydraulic control unit of a boiler, the valve (10) comprising:
- a valve body (11) having an inlet opening (12) and an outlet duct (13) for a water flow, communicating with each other through a chamber (14) for a valve plug member (15),
the valve body (11) being made of moulded plastic material;
- a valve plug member (15) for shutting off the flow, movably supported within said chamber (14), and
- a spring means (16) shaped and disposed to bias the plug member (15) to a closed position against a watertight seat (17) coaxially arranged to the inlet opening (12) for the flow,
**characterised in that** a metal tubular connection member (18) is provided at the inlet opening (12) of the valve body (11), for connection to the hydraulic control unit,
said metal connection member (18) being provided, at a first end, with watertight coupling means for coupling to the inlet opening (12) of the valve body (11), and, at a second end, with connecting means for connection to the hydraulic control unit.

2. Safety valve (10) according to claim 1, **characterised in that** said metal tubular connection member (18) extends into said inlet opening (12) of the valve body (11), ending at its first end with said watertight seat (17) for the plug member (15).

3. Safety valve (10) according to claim 1, **characterised in that** the valve body (11) is provided with said watertight seat (17) for the plug member (15), coaxially arranged to the inlet opening (12) for the flow.

4. Safety valve (10) according to claim 2 or 3, **characterised in that** the watertight coupling means for coupling the connection member (18) to the valve body (11) comprise:
- a first fastening screw thread (20), at the first end of said connection member (18), said first screw thread (20) being engageable with a corresponding screw thread (21) in said inlet opening (12) of the valve body (11), and
- a first annular sealing element (22), housed in a first peripheral annular seat (23) in the connection member (18), the sealing element (22) being shaped and disposed in such a way as to remain tightly in contact with a surface (24) inside the inlet opening (12) of the valve body (11).

5. Safety valve (10) according to claim 2 or 3, **characterised in that** said connection member (18) comprises at its first end an annular rib (19), mechanically and tightly coupled to the valve body (11) by moulding the valve body (11) itself onto the first end of the connection member (18).

6. Safety valve (10) according to claim 2 o 3, **characterised in that** the watertight coupling means between the connection member (18) and the valve body (11) comprise:
- a first peripheral annular groove (25) at the first end of the connection member (18);
- axially aligned holes (26', 26"; 27', 27") which extend along two opposite sides of the inlet opening (12) of the valve body (11);
- a retaining fork (28) for retaining the connection member (18), insertable into said axially aligned holes (26', 26"; 27', 27") of the valve body (11), the retaining fork (28) extending through said annular groove (25) in the connection member (18), and
- a first annular sealing element (22), housed in a first peripheral annular seat (23) in the connection member (18), the sealing element (22) being shaped and disposed in such a way as to remain tightly in contact with a surface (24) inside the inlet opening (12) of the valve body (11).

7. Safety valve (10) according to claim 4 or 5 or 6, **characterised in that** said connecting means provided on the second end of the connection member (18) comprise a second screw thread (29) for securing the valve (10) to the hydraulic control unit.

8. Safety valve (10) according to claim 4 or 5 or 6, **characterised in that** said connecting means provided on the second end of the connection member (18) comprise:
- a second peripheral annular groove (30), engageable by retaining means (31) provided on the hydraulic control unit; and
- a second annular sealing element (32), housed in a second peripheral annular seat (33) in the connection member (18).

9. Safety valve (10) according to claim 1, **characterised in that** said connection member (18) is made of brass.
